(19) Europäisches Patentamt

European Patent Office

Office européen des brevets

(11) EP 2 298 014 B1

(12) **EUROPEAN PATENT SPECIFICATION**

(45) Date of publication and mention
of the grant of the patent:
**13.02.2013 Bulletin 2013/07**

(21) Application number: **09724610.2**

(22) Date of filing: **03.03.2009**

(51) Int Cl.:
***H04W 56/00*** *(2009.01)*

(86) International application number:
**PCT/US2009/035932**

(87) International publication number:
**WO 2009/120461 (01.10.2009 Gazette 2009/40)**

(54) **METHODS AND APPARATUS FOR MEASURING ROUND-TRIP DELAY AT A MOBILE STATION**

VERFAHREN UND VORRICHTUNGEN ZUR MESSUNG DER GESAMTLAUFZEIT IN EINER MOBILSTATION

PROCÉDÉS ET APPAREIL POUR MESURER LE TEMPS DE TRANSMISSION ALLER-RETOUR AU NIVEAU D'UNE STATION MOBILE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **26.03.2008 US 56222**

(43) Date of publication of application:
**23.03.2011 Bulletin 2011/12**

(73) Proprietor: **QUALCOMM Incorporated
San Diego, California 92121-1714 (US)**

(72) Inventors:
• **CHIN, Tom
San Diego
California 92121-1714 (US)**
• **LEE, Kuo-Chun
San Diego
California 92121-1714 (US)**

(74) Representative: **O'Neill, Aoife et al
Tomkins & Co.
5 Dartmouth Road
Dublin 6 (IE)**

(56) References cited:
**EP-A- 1 389 028      EP-A- 1 643 784
EP-A- 1 852 981**

• **PETER W C CHAN ET AL: "The evolution path of 4G networks: FDD or TDD?" 1 December 2006 (2006-12-01), IEEE COMMUNICATIONS MAGAZINE, IEEE SERVICE CENTER, PISCATAWAY, US, PAGE(S) 42 - 50 , XP011153048 ISSN: 0163-6804 page 44, left-hand column, last paragraph - page 44, right-hand column, paragraph 1 page 46, right-hand column, paragraph 1**
• **LARS BERLEMANN ET AL: "Unlicensed Operation of IEEE 802.16: Coexistence with 802.11(A) in Shared Frequency Bands" 1 September 2006 (2006-09-01), PERSONAL, INDOOR AND MOBILE RADIO COMMUNICATIONS, 2006 IEEE 17TH INTER NATIONAL SYMPOSIUM ON, IEEE, PI, PAGE(S) 1 - 5 , XP031023867 ISBN: 978-1-4244-0329-5 paragraphs [00II], [00IV], [LASTPARAGRAPH]; figure 5**

**Description**

<u>TECHNICAL FIELD</u>

The present disclosure relates generally to wireless communication systems. More specifically, the present disclosure relates to methods and apparatus for measuring round-trip delay at a mobile station.

<u>BACKGROUND</u>

Wireless communication devices have become smaller and more powerful in order to meet consumer needs and to improve portability and convenience. Consumers have become dependent upon wireless communication devices such as cellular telephones, personal digital assistants (PDAs), laptop computers, and the like. Consumers have come to expect reliable service, expanded areas of coverage, and increased functionality. Wireless communication devices may be referred to as mobile stations, stations, access terminals, user terminals, terminals, subscriber units, user equipment, *etc*.

A wireless communication system may simultaneously support communication for multiple wireless communication devices. A wireless communication device may communicate with one or more base stations (which may alternatively be referred to as access points, Node Bs, *etc*.) via transmissions on the uplink and the downlink. The uplink (or reverse link) refers to the communication link from the wireless communication devices to the base stations, and the downlink (or forward link) refers to the communication link from the base stations to the wireless communication devices.

A communication link that facilitates transmission from a base station to a wireless communication device may be referred to as a forward link, and a communication link that facilitates transmission from a wireless communication device to a base station may be referred to as a reverse link. Alternatively, a forward link may be referred to as a downlink or a forward channel, and a reverse link may be referred to as an uplink or a reverse channel.

Wireless communication systems may be multiple-access systems capable of supporting communication with multiple users by sharing the available system resources (e.g., bandwidth and transmit power). Examples of such multiple-access systems include code division multiple access (CDMA) systems, time division multiple access (TDMA) systems, frequency division multiple access (FDMA) systems, and orthogonal frequency division multiple access (OFDMA) systems.

European Patent Application Publication No. 1 643 784 relates to delay estimating for uplink transmissions. European Patent Application Publication No. 1 389 028 relates to a system and method for measuring propagation delay in a narrowband TDD CDMA mobile communication system. European Patent Application Publication No. 1 852 981 discloses a method to estimate multiple round trip delays attached to cellular terminals from a RACH signal received within a dedicated time slot multiplexed onto an uplink traffic multiplex frame. "The Evolution Path of 4G Networks: FDD or TDD?", Chan et al, December 2006 discusses the features and the design and implementation challenges of FDD and TDD systems for 4G wireless systems. "Unlicensed operation of IEEE 802.16: Coexistence with 802.11(A) in shared frequency bands", Berlemann et al, September 2006, discusses the unlicensed U-NII frequency band at 5 GHz.

<u>BRIEF DESCRIPTION OF THE DRAWINGS</u>

Figure 1 illustrates a wireless communication system in which the methods and apparatus described herein may be implemented;
Figure 2 illustrates an example showing how a mobile station may calculate round-trip delay;
Figure 3 illustrates an example of a method for measuring round-trip delay;
Figure 4 illustrates means-plus-function blocks corresponding to the method of Figure 3;
Figure 5 illustrates another example of a method for measuring round-trip delay;
Figure 6 illustrates means-plus-function blocks corresponding to the method of Figure 5;
Figure 7 illustrates another example showing how a mobile station may calculate the round-trip delay;
Figure 8 illustrates another example of a method for measuring round-trip delay;
Figure 9 illustrates means-plus-function blocks corresponding to the method of Figure 8;
Figure 10 illustrates another example of a method for measuring round-trip delay;
Figure 11 illustrates means-plus-function blocks corresponding to the method of Figure 10; and
Figure 12 illustrates various components that may be utilized in a wireless device.

<u>DETAILED DESCRIPTION</u>

The methods and apparatus of the present disclosure may be utilized in a broadband wireless communication system. The term "broadband wireless" refers to technology that provides wireless, voice, Internet, and/or data network access over a given area.

The Institute of Electronic and Electrical Engineers (IEEE) 802.16 Working Group on Broadband Wireless Access Standards aims to prepare formal specifications for the global deployment of broadband Wireless Metropolitan Area Networks. Although the 802.16 family of standards is officially called WirelessMAN, it has been called "WiMAX" (which stands for the "Worldwide Interoperability for Microwave Access") by an industry group called the WiMAX Forum. Thus, the term "WiMAX" refers to a standards-based broadband wireless technology that provides high-throughput broadband connections over long distances.

There are two main applications of WiMAX today: fixed WiMAX and mobile WiMAX. Fixed WiMAX applications are point-to-multipoint, enabling broadband access to homes and businesses. Mobile WiMAX offers the full mobility of cellular networks at broadband speeds.

Some of the examples described herein are relevant to the WiMAX time division duplex (TDD) system. However, these examples should not be interpreted as limiting the scope of the present disclosure.

The "round-trip delay" refers to the time delay of a signal traveling from the base station to the mobile station, and from the mobile station to the base station. The round-trip delay may be used for a variety of purposes, such as handoff, determining the location of the mobile station, *etc.* The round-trip delay may sometimes be referred to as the base station round-trip delay.

In some systems, the base stations measure the round-trip delay. However, under some circumstances, it may be desirable for the mobile stations to measure the round-trip delay. For example, the mobile WiMAX standards indicate that the mobile stations measure the round-trip delay. The present disclosure relates to techniques for measuring round-trip delay at a mobile station.

A method for measuring round-trip delay at a mobile station may include determining a first time difference between two different types of frames at a base station. The method may also include determining a second time difference between the two different types of frames at a mobile station. The method may also include calculating the round-trip delay based on the first time difference and the second time difference.

A mobile station that measures round-trip delay may include a processor, and memory in electronic communication with the processor. Instructions may be stored in the memory. The instructions may be executable to determine a first time difference between two different types of frames at a base station. The instructions may also be executable to determine a second time difference between the two different types of frames at a mobile station. The instructions may also be executable to calculate the round-trip delay based on the first time difference and the second time difference.

A mobile station for measuring round-trip delay may include means for determining a first time difference between two different types of frames at a base station. The mobile station may also include means for determining a second time difference between the two different types of frames at a mobile station. The mobile station may also include means for calculating the round-trip delay based on the first time difference and the second time difference.

A computer-program product for measuring round-trip delay may include a computer-readable medium having instructions thereon. The instructions may include code for determining a first time difference between two different types of frames at a base station. The instructions may also include code for determining a second time difference between the two different types of frames at a mobile station. The instructions may also include code for calculating the round-trip delay based on the first time difference and the second time difference.

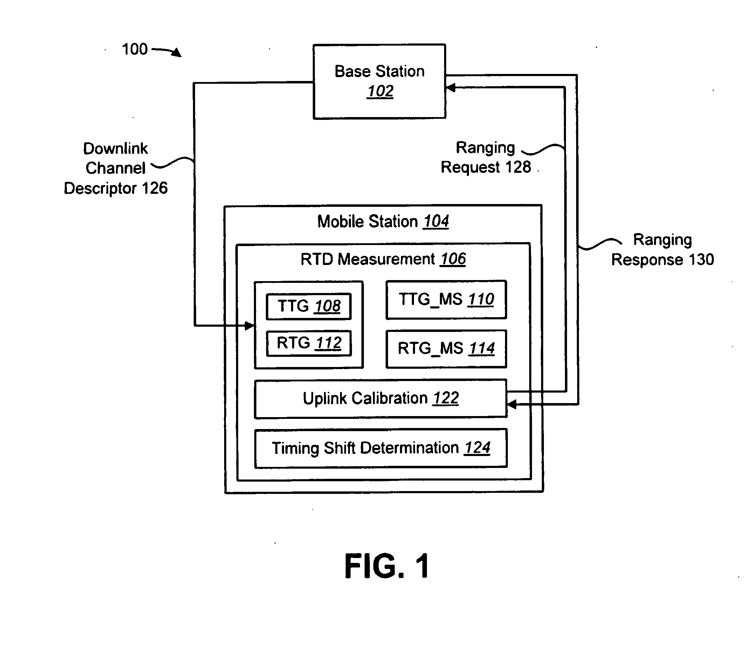

Figure 1 illustrates a wireless communication system 100 in which the methods and apparatus described herein may be implemented. A base station 102 is shown in wireless electronic communication with a mobile station 104. For simplicity, only one mobile station 104 is shown in Figure 1. However, a base station 102 may be in electronic communication with multiple mobile stations 104, each of which may be configured similarly to the mobile station 104 that is shown in Figure 1.

The mobile station 104 may be configured to measure the round-trip delay. As indicated above, the "round-trip delay" refers to the time delay of a signal traveling from the base station 102 to the mobile station 104, and from the mobile station 104 to the base station 102. The mobile station 104 is shown with a round-trip delay measurement component 106 for measuring the round-trip delay.

The mobile station 104 may measure the round-trip delay using the transmit/receive transition gap at the base station 102 (TTG 108), and the transmit/receive transition gap at the mobile station 104 (TTG_MS 110). The TTG 108 is the time difference, measured at the base station 102 antenna port, between the end of the downlink frame and the start of the uplink frame in a time division duplex (TDD) system. The TTG_MS 110 is the time difference, measured at the mobile station 104 antenna port, between the end of the downlink frame and the start of the uplink frame in a TDD system. Additional details about how the mobile station 104 may determine the round-trip delay using the TTG 108 and the TTG_MS 110 will be provided below.

Alternatively, the mobile station 104 may determine the round-trip delay using the receive/transmit transition gap at the base station 102 (RTG 112), and the receive/transmit transition gap at the mobile station 104 (RTG_MS 114). The RTG 112 is the time difference, measured at the base station 102 antenna port, between the end of the uplink frame and the start of the downlink frame in a TDD system. The RTG_MS 114 is the time difference, measured at the mobile station 104 antenna port, between the end of the uplink frame and the start of the downlink frame in a TDD system. Additional details about how the mobile station 104 may determine the round-trip delay using the RTG 112 and the RTG_MS 114 will be provided below.

The TTG 108 and the RTG 112 may be received from the base station 102 as part of a downlink channel descriptor 126, which may be broadcast to multiple mobile stations 104. However, there are other ways that the mobile station 104 may determine the TTG 108 and the RTG 112, and the scope of the present disclosure should not be limited in this regard.

Before measuring the round-trip delay, the mobile station 104 may calibrate the uplink transmission timing in order to achieve uplink frame synchronization. For example, in mobile WiMAX air-interface protocols, the uplink data from all mobile stations 104 in the same sector are synchronized at the base station 102. The mobile station 104 is shown with an uplink calibration component 122 for calibrating the uplink transmission timing. Calibrating the uplink transmission timing may involve sending a ranging request 128 to the base station 102. Upon receiving the ranging request 128, the base station 102 may measure the delay of received uplink data from the mobile station 104, compare it against the desired timing of the uplink frame, calculate the timing difference, and send a ranging response 130 back to the mobile station 104. The mobile station 104 may adjust the uplink transmission timing based on the information contained within the ranging response 130.

The mobile station 104 may also keep track of the timing shift of the downlink frame since the uplink transmission timing was last calibrated. The mobile station 104 is shown with a timing shift determination component 124 for implementing this functionality. The mobile station 104 may account for the timing shift in the calculation of the round-trip delay, as will be described in greater detail below. This may be useful in situations where it may not be feasible to calibrate the uplink transmission timing when a trigger is received to measure the round-trip delay.

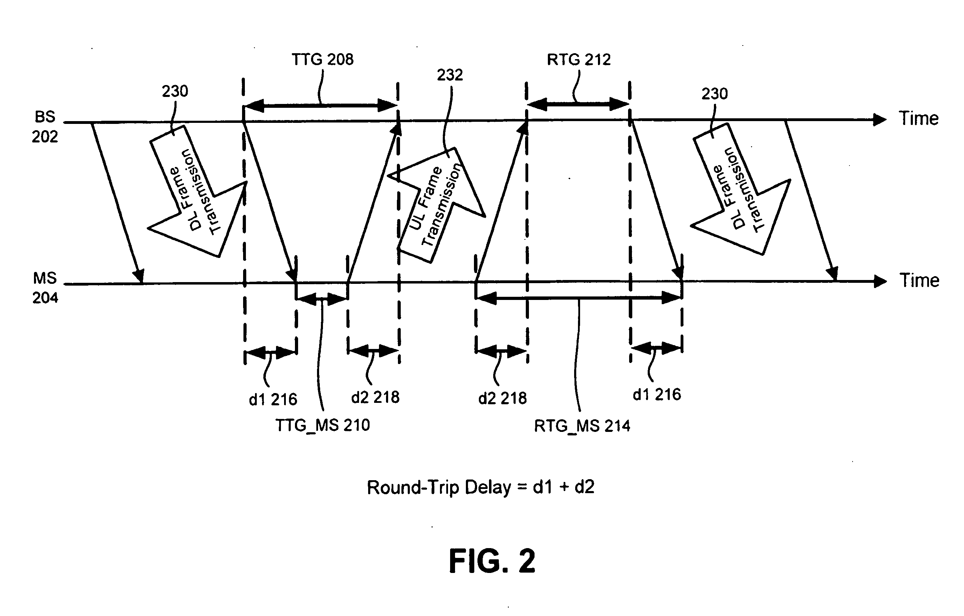

Figure 2 illustrates an example showing how a mobile station 204 may calculate the round-trip delay. The mobile station 104 in the system 100 of Figure 1 may calculate the round-trip delay in accordance with the example shown in Figure 2.

Figure 2 shows two parameters, d1 216 and d2 218. The parameter d1 216 indicates the delay between the time that a signal is transmitted from the base station 202 and the time that the signal is received at the mobile station 204. The parameter d2 218 indicates the delay between the time that a signal is transmitted from the mobile station 204 and the time that the signal is received at the base station 202. The round-trip delay may be expressed as the sum of the parameter d1 216 and the parameter d2 218.

The TTG 208 and the TTG_MS 210 are shown in Figure 2. As indicated above, the TTG 208 is the time difference, measured at the base station 202 antenna port, between the end of the downlink frame 230 and the start of the uplink frame 232. The mobile station 204 may receive the TTG 208 from the base station 202. The TTG_MS 210 is the time difference, measured at the mobile station 204 antenna port, between the end of the downlink frame 230 and the start of the uplink frame 232. The mobile station 204 may calculate the TTG_MS 210.

As indicated above, the mobile station 204 may calculate the round-trip delay using the TTG 208 and the TTG_MS 210. The mobile station 204 may calculate the round-trip delay in accordance with equation (1):

$$\text{round-trip delay} = \text{TTG} - \text{TTG\_MS} \qquad (1)$$

The RTG 212 and the RTG_MS 214 are also shown in Figure 2. As indicated above, the RTG 212 is the time difference, measured at the base station 202 antenna port, between the end of the uplink frame 232 and the start of the downlink frame 230. The mobile station 204 may receive the RTG 212 from the base station 202. The RTG_MS 214 is the time difference, measured at the mobile station 204 antenna port, between the end of the uplink frame 232 and the start of the downlink frame 230. The mobile station 204 may calculate the RTG_MS 214.

As indicated above, the mobile station 204 may calculate the round-trip delay using the RTG 212 and the RTG_MS 214. More specifically, the mobile station 204 may calculate the round-trip delay in accordance with equation (2):

$$\text{round-trip delay} = \text{RTG\_MS} - \text{RTG} \qquad (2)$$

As indicated above, in response to a trigger to measure the round-trip delay, the mobile station 204 may calibrate the uplink transmission timing in order to achieve uplink frame synchronization. The example shown in Figure 2 assumes that the mobile station 204 calibrates the uplink transmission timing. However, it is not necessary that the mobile station 204 calibrate the uplink transmission timing, and the scope of the present disclosure should not be limited in this regard.

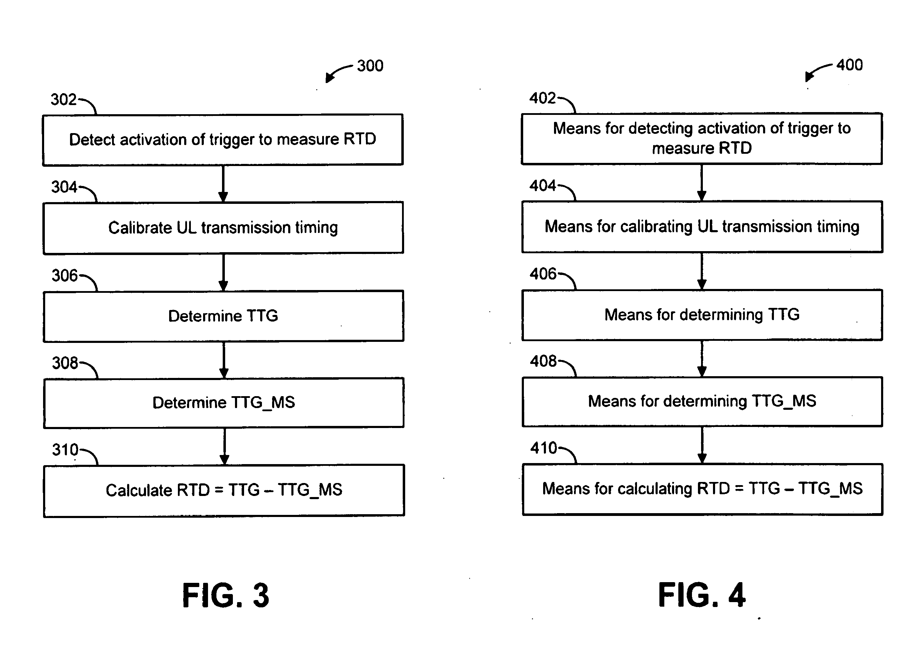

Figure 3 illustrates an example of a method 300 for measuring round-trip delay. In this example, it is assumed that the round-trip delay is calculated in accordance with equation (1) above. The method 300 may be implemented by the mobile station 104 in the system 100 of Figure 1.

In response to detecting 302 activation of a trigger to measure the round-trip delay, the mobile station 104 may calibrate 304 the uplink transmission timing. As indicated above, this may involve sending a ranging request 128 to the base station 102. Upon receiving the ranging request 128, the base station 102 may measure the delay of received uplink data from the mobile station 104, compare it against the desired timing of the uplink frame, calculate the timing difference, and send a ranging response 130 back to the mobile station 104. The mobile station 104 may adjust the uplink transmission timing based on the ranging response 130.

The mobile station 104 may determine 306 the TTG 208, and also determine 308 the TTG_MS 210. In this context, the term "determine" should be interpreted broadly to encompass any way in which the mobile station 104 may ascertain the TTG 208 and the TTG_MS 210. As indicated above, the mobile station 204 may receive the TTG 208 from the base station 202, and the mobile station 204 may calculate the TTG_MS 210. However, the present disclosure should not be limited in this regard.

When the TTG 208 and the TTG_MS 210 have been determined 306, 308, the round-trip delay may be calculated 310 in accordance with equation (1) above. The round-trip delay may then be used for a variety of purposes, such as handoff, determining the location of the mobile station 104, *etc.*

The method 300 of Figure 3 described above may be performed by various hardware and/or software component (s) and/or module(s) corresponding to the means-plus-function blocks 400 illustrated in Figure 4. In other words, blocks 302 through 310 illustrated in Figure 3 correspond to means-plus-function blocks 402 through 410 illustrated in Figure 4.

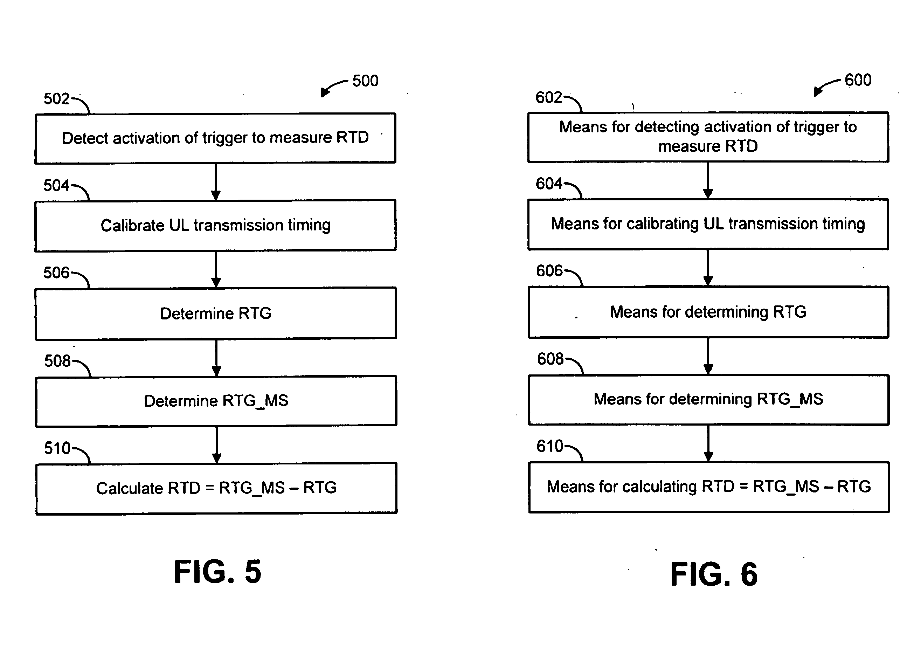

Figure 5 illustrates a method 500 for measuring round-trip delay. In this method 500, it is assumed that the round-trip delay is calculated in accordance with equation (2) above. The method 500 may be implemented by the mobile station 104 in the system 100 of Figure 1.

In response to detecting 502 activation of a trigger to measure the round-trip delay, the mobile station 104 may calibrate 504 the uplink transmission timing, as described above. The mobile station 104 may determine 506 the RTG 212, and also determine 508 the RTG_MS 214. As before, the term "determine" should be interpreted broadly to encompass any way in which the mobile station 104 may ascertain the RTG 212 and the RTG_MS 214. The mobile station 204 may receive the RTG 212 from the base station 202, and the mobile station 204 may calculate the RTG_MS 214. However, the present disclosure should not be limited in this regard.

When the RTG 212 and the RTG_MS 214 have been determined 506, 508, the round-trip delay may be calculated 510 in accordance with equation (2) above. The round-trip delay may then be used for a variety of purposes, such as handoff, determining the location of the mobile station 104, *etc.*

The method 500 of Figure 5 described above may be performed by various hardware and/or software component (s) and/or module(s) corresponding to the means-plus-function blocks 600 illustrated in Figure 6. In other words, blocks 502 through 510 illustrated in Figure 5 correspond to means-plus-function blocks 602 through 610 illustrated in Figure 6.

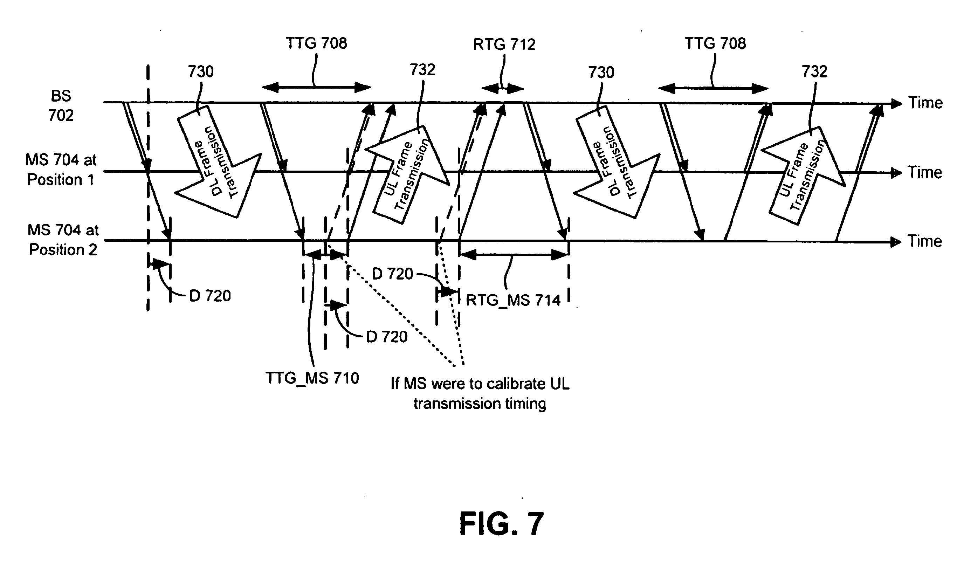

Figure 7 illustrates another example showing how a mobile station 704 may calculate the round-trip delay. This example may be relevant in a situation where it may not be feasible to calibrate the uplink transmission timing when a trigger is received to measure the round-trip delay. The mobile station 104 in the system 100 of Figure 1 may calculate the round-trip delay in accordance with the example shown in Figure 7.

The TTG 708 and the TTG_MS 710 are shown in Figure 7. In addition, the RTG 712 and the RTG_MS 714 are also shown in Figure 7.

The parameter D 720 is also shown in Figure 7. The parameter D 720 indicates the timing shift of the downlink frame since the uplink transmission timing was last calibrated. This timing shift may be due to a change in position of the mobile station 704.

Figure 7 shows the timing shift occurring due to the mobile station 704 moving farther away from the base station 702 (*i.e.*, the mobile station 704 is shown changing position from position 1 to position 2, where position 2 is farther away from the base station 702 than position 1). In this case, from the perspective of the mobile station 704, the downlink frame 730 ends later than was previously calculated during the last calibration but the uplink frame 732 begins at the mobile station 704 as previously calculated during the last calibration.

Of course, a timing shift may also occur due to the mobile station 704 moving closer to the base station 702. In this case, from the perspective of the mobile station 704, the downlink frame 730 ends sooner than was previously calculated during the last calibration but the uplink frame 732 begins at the mobile station as previously calculated during the last calibration.

The mobile station 704 may determine the value of the parameter D 720, and may therefore account for the timing shift when calculating the round-trip delay. For example, where the mobile station 704 calculates the round-trip delay using the TTG 708 and the TTG_MS 710, the mobile station 704 may correct for the timing shift in accordance with equation (3):

$$\text{round-trip delay} = \text{TTG} - \text{TTG\_MS} + D \qquad (3)$$

Where the mobile station 704 calculates the round-trip delay using the RTG 712 and the RTG_MS 714, the mobile station 704 may correct for the timing shift in accordance with equation (4):

$$\text{round-trip delay} = \text{RTG\_MS} - \text{RTG} + D \qquad (4)$$

In equations (3) and (4), the parameter D 720 is positive if the timing shift is due to the mobile station 704 moving farther away from the base station 702, as shown in Figure 7. The parameter D 720 is negative if the timing shift is due to the mobile station 704 moving closer to the base station 702.

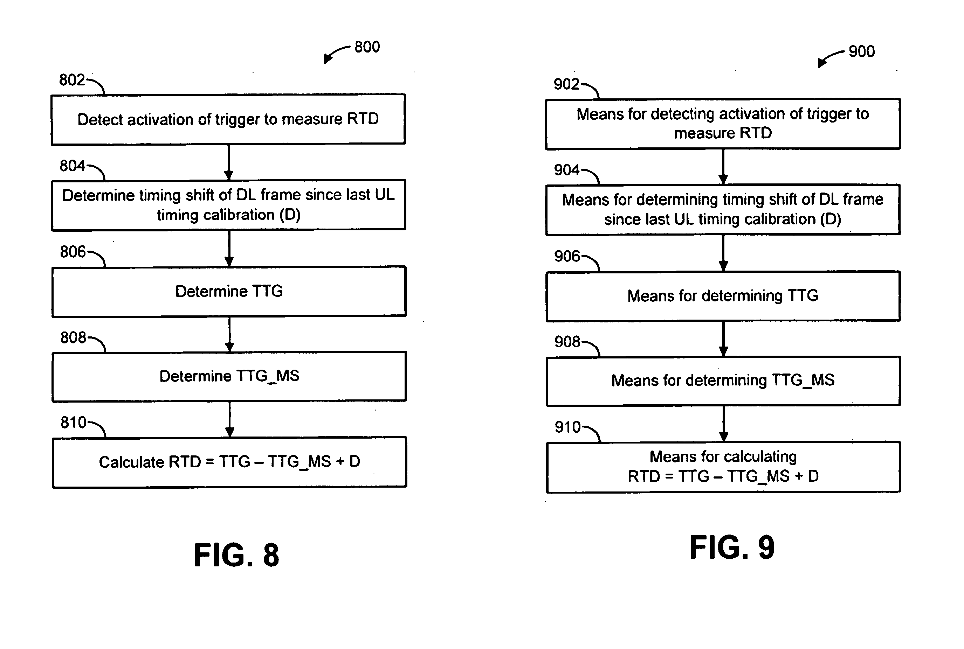

Figure 8 illustrates another example of a method 800 for measuring round-trip delay. In this example, it is assumed that the round-trip delay is calculated in accordance with equation (3) above. The method 800 may be implemented by the mobile station 104 in the system 100 of Figure 1.

In response to detecting 802 activation of a trigger to measure the round-trip delay, the mobile station 104 may determine 804 the timing shift of the downlink frame since the uplink transmission timing was last calibrated (i.e., the parameter D 720). The mobile station 104 may also determine 806 the TTG 708, and determine 808 the TTG_MS 710. The TTG 708 and the TTG_MS 710 may be determined 806, 808 as described above. The round-trip delay may then be calculated 810 in accordance with equation (3) above.

The method 800 of Figure 8 described above may be performed by various hardware and/or software component (s) and/or module(s) corresponding to the means-plus-function blocks 900 illustrated in Figure 9. In other words, blocks 802 through 810 illustrated in Figure 8 correspond to means-plus-function blocks 902 through 910 illustrated in Figure 9.

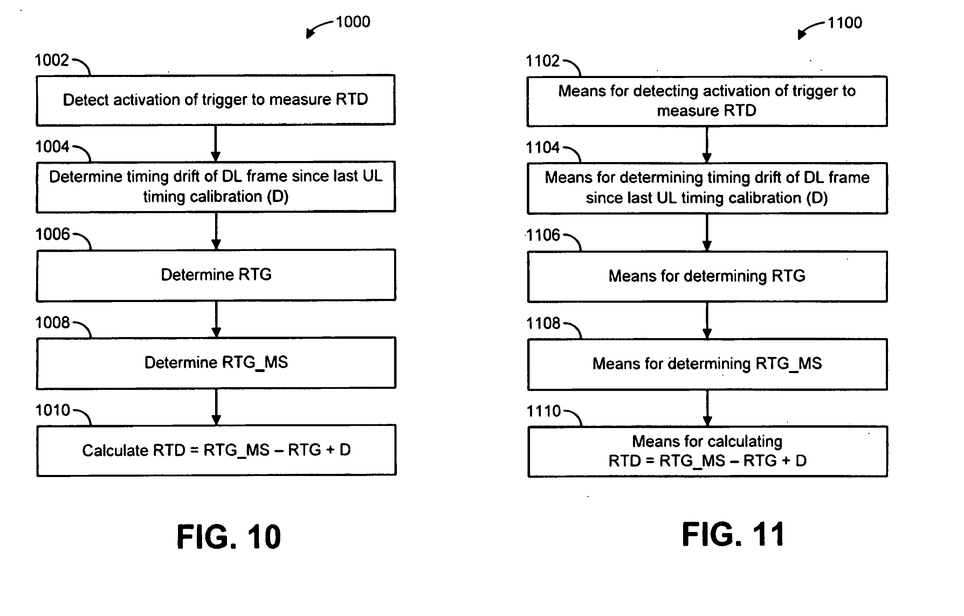

Figure 10 illustrates another example of a method 1000 for measuring round-trip delay. In this example, it is assumed that the round-trip delay is calculated in accordance with equation (4) above. The method 1000 may be implemented by the mobile station 104 in the system 100 of Figure 1.

In response to detecting 1002 activation of a trigger to measure the round-trip delay, the mobile station 104 may determine 1004 the timing shift of the downlink frame since the uplink transmission timing was last calibrated (i.e., the parameter D 720). The mobile station 104 may also determine 1006 the RTG 712, and determine 1008 the RTG_ MS 714. The RTG 712 and the RTG_MS 714 may be determined 1006, 1008 as described above. The round-trip delay may then be calculated 1010 in accordance with equation (4) above.

The method 1000 of Figure 10 described above may be performed by various hardware and/or software component(s) and/or module(s) corresponding to the means-plus-function blocks 1100 illustrated in Figure 11. In other words, blocks 1002 through 1010 illustrated in Figure 10 correspond to means-plus-function blocks 1102 through 1110 illustrated in Figure 11.

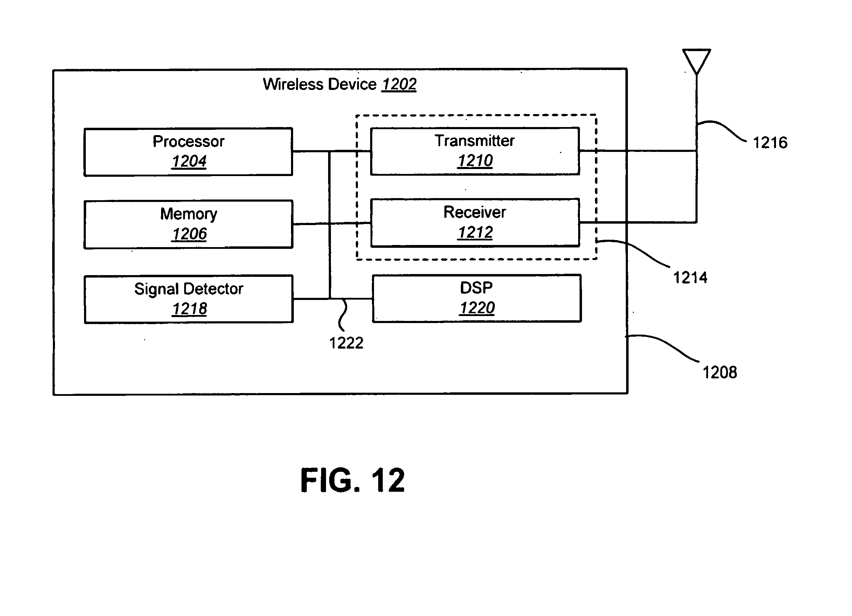

Figure 12 illustrates various components that may be utilized in a wireless device 1202. The wireless device 1202 is an example of a device that may be configured to implement the various methods described herein. The wireless device 1202 may be a base station 102 or a mobile station 104.

The wireless device 1202 may include a processor 1204 which controls operation of the wireless device 1202. The processor 1204 may also be referred to as a central processing unit (CPU). Memory 1206, which may include both read-only memory (ROM) and random access memory (RAM), provides instructions and data to the processor 1204. A portion of the memory 1206 may also include non-volatile random access memory (NVRAM). The processor 1204 typically performs logical and arithmetic operations based on program instructions stored within the memory 1206. The instructions in the memory 1206 may be executable to implement the methods described herein.

The wireless device 1202 may also include a housing 1208 that may include a transmitter 1210 and a receiver 1212 to allow transmission and reception of data between the wireless device 1202 and a remote location. The transmitter 1210 and receiver 1212 may be combined into a transceiver 1214. An antenna 1216 may be attached to the housing 1208 and electrically coupled to the transceiver 1214. The wireless device 1202 may also include (not shown) multiple transmitters, multiple receivers, multiple transceivers and/or multiple antenna.

The wireless device 1202 may also include a signal detector 1218 that may be used to detect and quantify the level of signals received by the transceiver 1214. The signal detector 1218 may detect such signals as total energy, pilot energy per pseudonoise (PN) chips, power spectral density, and other signals. The wireless device 1202 may also include a digital signal processor (DSP) 1220 for use in processing signals.

The various components of the wireless device 1202 may be coupled together by a bus system 1222 which may include a power bus, a control signal bus, and a status signal bus in addition to a data bus. However, for the sake of clarity, the various busses are illustrated in Figure 12 as the bus system 1222.

As used herein, the term "determining" encompasses a wide variety of actions and, therefore, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

The phrase "based on" does not mean "based only on," unless expressly specified otherwise. In other words, the phrase "based on" describes both "based only on" and "based at least on."

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device, discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core or any other such configuration.

The steps of a method or algorithm described in connection with the present disclosure may be embodied directly in hardware, in a software module executed by a processor or in a combination of the two. A software module may reside in any form of storage medium that is known in the art. Some examples of storage media that may be used include RAM memory, flash memory, ROM memory, EPROM memory, EEPROM memory, registers, a hard disk, a removable disk, a CD-ROM and so forth. A software module may comprise a single instruction, or many instructions, and may be distributed over several different code segments, among different programs and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in software, the functions may be stored as one or more instructions on a computer-readable medium. A computer-readable medium may be any available medium that can be accessed by a computer. By way of example, and not limitation, a computer-readable medium may comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray® disc where disks usually reproduce data magnetically, while discs reproduce data optically with lasers.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein, such as those illustrated by Figures 3, 5, 8, and 10 can be downloaded and/or otherwise obtained by a mobile device and/or base station as applicable. For example, such a device can be coupled to a server to facilitate the transfer of means for performing the methods described herein. Alternatively, various methods described herein can be provided via a storage means (e.g., random access memory (RAM), read only memory (ROM), a physical storage medium such as a compact disc (CD) or floppy disk, etc.), such that a mobile device and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the systems, methods, and apparatus described herein without departing from the scope of the claims.

## Claims

1. A method (300) for measuring round-trip delay, the method being implemented by a mobile station, the method comprising:

determining (306) a first time difference between two different types of frames at a base station, wherein the first time difference is a transmit/receive transition gap at the base station, TTG, wherein the TTG is the time difference between the end of a downlink frame and the start of an uplink frame;
determining (308) a second time difference between the two different types of frames at a mobile station, wherein the second time difference is a transmit/receive transition gap at the mobile station, TTG_MS, wherein the TTG_MS is the time difference between the end of the downlink frame and the start of the uplink frame; and
calculating (310) the round-trip delay based on the first time difference and the second time difference.

2. The method of claim 1, wherein the round-trip delay is calculated as TTG - TTG_MS.

3. A method (500) for measuring round-trip delay, the method being implemented by a mobile station, the method comprising:

determining (506) a first time difference between two different types of frames at a base station, wherein the first time difference is a receive/transmit transition gap at the base station, RTG, wherein the RTG is the time difference between the end of an uplink frame and the start of a downlink frame;
determining (508) a second time difference between the two different types of frames at a mobile station, wherein the second time difference is a receive/transmit transition gap at the mobile station, RTG_MS, wherein the RTG_MS is the time difference between the end of the uplink frame and the start of the downlink frame; and
calculating (510) the round-trip delay based on the first time difference and the second time difference.

4. The method of claim 3, wherein the round-trip delay is calculated as RTG_MS-RTG.

5. The method of claim 1 or claim 3, further comprising calibrating (304, 504) uplink transmission timing.

6. The method of claim 1 or claim 3, further comprising:

determining (804, 1004) a timing shift of a downlink frame since a previous uplink timing calibration; and
accounting (810, 1010) for the timing shift in the calculation of the round-trip delay.

7. The method of claim 1, wherein the round-trip delay is calculated as TTG - TTG_MS + D, and wherein D is a timing shift of a downlink frame since a previous uplink timing calibration.

8. The method of claim 3, wherein the round-trip delay is calculated as RTG_MS-RTG + D, and wherein D is a timing shift of a downlink frame since a previous uplink timing calibration.

9. A mobile station (400) for measuring round-trip delay, comprising:

means (406) for determining a first time difference between two different types of frames at a base station, wherein the first time difference is a transmit/receive transition gap at the base station, TTG, wherein the TTG is the time difference between the end of a downlink frame and the start of an uplink frame;
means (408) for determining a second time difference between the two different types of frames at a mobile station, wherein the second time difference is a transmit/receive transition gap at the mobile station, TTG_MS, wherein the TTG_MS is the time difference between the end of the downlink frame and the start of the uplink frame; and
means (410) for calculating the round-trip delay based on the first time difference and the second time difference.

10. The mobile station of claim 9, wherein the round-trip delay is calculated as TTG - TTG_MS.

11. A mobile station (600) for measuring round-trip delay, comprising:

means (606) for determining a first time difference between two different types of frames at a base station, wherein the first time difference is a receive/transmit transition gap at the base station, RTG, wherein the RTG is the time difference between the end of an uplink frame and the start of a downlink frame;
means (608) for determining a second time difference between the two different types of frames at a mobile station, wherein the second time difference is a receive/transmit transition gap at the mobile station, RTG_MS, wherein the RTG_MS is the time difference between the end of the uplink frame and the start of the downlink frame; and

means (610) for calculating the round-trip delay based on the first time difference and the second time difference.

12. The mobile station of claim 11, wherein the round-trip delay is calculated as RTG_MS - RTG.

13. The mobile station of claim 9 or claim 11, further comprising means (404, 604) for calibrating uplink transmission timing.

14. The mobile station of claim 9 or claim 11, further comprising:

means (904, 1104) for determining a timing shift of a downlink frame since a previous uplink timing calibration; and
means (910, 1110) for accounting for the timing shift in the calculation of the round-trip delay.

15. The mobile station of claim 9, wherein the round-trip delay is calculated as TTG - TTG_MS + D, and wherein D is a timing shift of a downlink frame since a previous uplink timing calibration.

16. The mobile station of claim 11, wherein the round-trip delay is calculated as RTG_MS - RTG + D, and wherein D is a timing shift of a downlink frame since a previous uplink timing calibration.

17. A computer-program product for measuring round-trip delay, the computer-program product comprising a computer-readable medium having instructions thereon which when executed by a processor cause the processor to perform a method according to any of claims 1 to 8.


**Patentansprüche**

1. Ein Verfahren (300) zum Messen von Hin-und-Zurück-Verzögerung, bzw. round trip delay, wobei das Verfahren in einer Mobilstation implementiert ist und folgendes aufweist:

Bestimmen (306) einer ersten Zeitdifferenz zwischen zwei verschiedenen Rahmentypen an einer Basisstation, wobei die erste Zeitdifferenz eine Sende/Empfangs- Übergangslücke an der Basisstation, bzw. TTG (TTG = transmit/receive transition gap), ist, wobei die TTG die Zeitdifferenz zwischen dem Ende eines Downlinkrahmens und dem Start eines Uplinkrahmens ist;
Bestimmen (308) einer zweiten Zeitdifferenz zwischen den zwei unterschiedlichen Rahmentypen an einer Mobilstation, wobei die zweite Zeitdifferenz eine Sende/Empfangs- Übergangslücke an der Mobilstation, bzw. TTG_MS, (TTG_MS = transmit/receive transition gap at the mobile station), ist, und wobei die TTG_MS die Zeitdifferenz zwischen dem Ende des Downlinkrahmens und dem Start des Uplinkrahmens ist; und
Berechnen (310) der Hin-und-Zurück-Verzögerung basierend auf der ersten Zeitdifferenz und der zweiten Zeitdifferenz.

2. Verfahren nach Anspruch 1, wobei die Hin-und-Zurück-Verzögerung aus TTG - TTG_MS berechnet wird.

3. Ein Verfahren (500) zum Messen von Hin-und-Zurück-Verzögerung, bzw. round trip delay, das Verfahren ist in einer Mobilstation implementiert und weist auf:

Bestimmen (506) einer ersten Zeitdifferenz zwischen zwei verschiedenen Rahmentypen an einer Basisstation, wobei die erste Zeitdifferenz eine Empfangs/Sende- Übergangslücke an der Basisstation, bzw. RTG (RTG = receive/transmit transition gap), ist, wobei die RTG die Zeitdifferenz zwischen dem Ende eines Uplinkrahmens und dem Start eines Downlinkrahmens ist.
Bestimmen (508) einer zweiten Zeitdifferenz zwischen den zwei verschiedenen Rahmentypen von Rahmen an einer Mobilstation, wobei die zweite Zeitdifferenz eine Empfangs/Sende- Übergangslücke an der Mobilstation, bzw. RTG_MS (RTG_MS = receive/transmit transition gap at the mobile station), ist, und wobei die RTG_MS die Zeitdifferenz zwischen dem Ende des Uplinkrahmens und dem Start des Downlinkrahmens ist, und
Berechnen (510) der Hin-und-Zurück-Verzögerung basierend auf der ersten Zeitdifferenz und der zweiten Zeitdifferenz.

4. Verfahren nach Anspruch 3, wobei die Hin-und-Zurück-Verzögerung aus RTG_MS - RTG berechnet wird.

5. Verfahren nach Anspruch 1 oder Anspruch 3, das weiterhin Kalibrieren (304, 504) des Timings der Uplinkübertragung beinhaltet.

6. Verfahren nach Anspruch 1 oder Anspruch 3, das weiterhin folgendes aufweist:

Bestimmen (804,1004) einer Zeitverschiebung eines Downlinkrahmens seit einer vorausgegangenen Kalibrierung des Uplinktimings; und
Berücksichtigen (810, 1010) der Zeitverschiebung in der Berechnung der Hin-und-Zurück-Verzögerung.

7. Verfahren nach Anspruch 1, wobei die Hin-und-Zurück-Verzögerung als TTG - TTG_MS + D berechnet wird, und wobei D eine Zeitverschiebung eines Downlinkrahmens seit einer vorausgegangenen Kalibrierung des Uplinktimings ist.

8. Verfahren nach Anspruch 3, wobei die Hin-und-Zurück-Verzögerung als RTG_MS - RTG + D berechnet wird, und wobei D eine Zeitverschiebung eines Downlinkrahmens seit einer vorausgegangenen Kalibrierung des Uplinktimings ist.

9. Eine Mobilstation (400) zum Messen von Hin-und-Zurück-Verzögerung, bzw. round trip delay, die folgendes aufweist:

Mittel (406) zum Bestimmen einer ersten Zeitdifferenz zwischen zwei verschiedenen Rahmentypen an einer Basisstation, wobei die erste Zeitdifferenz eine Sende/Empfangs- Übergangslücke an der Basistation, bzw. TTG (TTG = transmit/receive transition gap), ist, und wobei die TTG die Zeitdifferenz zwischen dem Ende eines Downlinkrahmens und dem Start eines Uplinkrahmens ist;
Mittel (408) zum Bestimmen einer zweiten Zeitdifferenz zwischen den zwei verschiedenen Rahmentypen an einer Mobilstation, wobei die zweite Zeitdifferenz eine Sende/Empfangs- Übergangslücke an der Mobilstation, bzw. TTG_MS (TTG_MS = transmit/receive transition gap at the mobile station), ist, und wobei die TTG_MS die Zeitdifferenz zwischen dem Ende des Downlinkrahmens und dem Start des Uplinkrahmens ist; und
Mittel (410) zum Berechnen der Hin-und-Zurück-Verzögerung basierend auf der ersten Zeitdifferenz und der zweiten Zeitdifferenz.

10. Mobilstation nach Anspruch 9, wobei die Hin-und-Zurück-Verzögerung aus TTG - TTG_MS berechnet wird.

11. Eine Mobilstation (600) zur Messung von Hin-und-Zurück-Verzögerung, bzw. round trip delay, die folgendes aufweist:

Mittel (606) zum Bestimmen einer ersten Zeitdifferenz zwischen zwei verschiedenen Rahmentypen an einer Basisstation, wobei die erste Zeitdifferenz eine Empfangs/Sende- Übergangslücke an der Basisstation, bzw. RTG (RTG = receive/transmit transition gap) ist, wobei die RTG die Zeitdifferenz zwischen dem Ende eines Uplinkrahmens und dem Start eines Downlinkrahmens ist;
Mittel (608) zum Bestimmen einer zweiten Zeitdifferenz zwischen zwei verschiedenen Rahmentypen an einer Mobilstation, wobei die zweite Zeitdifferenz eine Empfangs/Sende Übergangslücke der Mobilstation, bzw. RTG_ MS (RTG_MS = receive/transmit transition gap at the mobile station), ist, und wobei die RTG_MS die Zeitdifferenz zwischen dem Ende des Uplinkrahmens und dem Start des Downlinkrahmens ist; und
Mittel (610) zum Berechnen der Hin-und-Zurück-Verzögerung basierend auf der ersten Zeitdifferenz und der zweiten Zeitdifferenz.

12. Mobilstation nach Anspruch 11, wobei die Hin-und-Zurück-Verzögerung aus RTG_MS - RTG berechnet wird.

13. Mobilstation nach Anspruch 9 oder Anspruch 11, die weiterhin Mittel (404, 604) zum Kalibrieren des Timings der Uplinkübertragung aufweist.

14. Mobilstation nach Anspruch 9 oder Anspruch 11, die weiterhin folgendes aufweist:

Mittel (904, 1104) zum Bestimmen einer Zeitverschiebung eines Downlinkrahmen seit einer vorausgegangen Kalibrierung des Uplinktimings; und
Mittel (910, 1110) zum Berücksichtigen der Zeitverschiebung in der Berechnung der Hin-und-Zurück-Verzögerung.

15. Mobilstation nach Anspruch 9, wobei die Hin-und-Zurück-Verzögerung aus TTG - TTG_MS + D berechnet wird, und wobei D eine Zeitverschiebung eines Downlinkrahmens seit einer vorausgegangen Kalibrierung des Uplinktimings ist.

**16.** Mobilstation nach Anspruch 11, wobei die Hin-und-Zurück-Verzögerung aus RTG_MS - RTG + D berechnet wird, und wobei D eine Zeitverschiebung eines Downlinkrahmens seit einer vorausgegangenen Kalibrierung des Uplinktimings ist.

**17.** Ein Computerprogrammprodukt zum Messen von Hin-und-Zurück-Verzögerung, das Computerprogrammprodukt weist ein computerlesbares Medium mit Instruktion darauf auf, die, wenn von einem Prozessor ausgeführt, den Prozessor zum Durchführen eines Verfahrens nach einem der Ansprüche 1 bis 8 veranlassen.

**Revendications**

**1.** Procédé (300) pour mesurer un temps d'aller-retour, le procédé étant mis en oeuvre par un poste mobile, le procédé comprenant les étapes suivantes :

déterminer (306) une première différence de temps entre deux types différents de trames au niveau d'une station de base, la première différence de temps étant un intervalle de transition émission/réception au niveau de la station de base, TTG, TTG étant la différence de temps entre la fin d'une trame de liaison descendante et le début d'une trame de liaison montante ;
déterminer (308) une deuxième différence de temps entre les deux types différents de trames au niveau d'un poste mobile, la deuxième différence de temps étant un intervalle de transition émission/réception au niveau du poste mobile, TTG_MS, TTG_MS étant la différence de temps entre la fin de la trame de liaison descendante et le début de la trame de liaison montante ; et
calculer (310) le temps d'aller-retour sur la base de la première différence de temps et de la deuxième différence de temps.

**2.** Procédé selon la revendication 1, dans lequel le temps d'aller-retour est calculé par TTG - TTG_MS.

**3.** Procédé (500) pour mesurer un temps d'aller-retour, le procédé étant mis en oeuvre par un poste mobile, le procédé comprenant les étapes suivantes :

déterminer (506) une première différence de temps entre deux types différents de trames au niveau d'une station de base, la première différence de temps étant un intervalle de transition réception/émission au niveau de la station de base, RTG, RTG étant la différence de temps entre la fin d'une trame de liaison montante et le début d'une trame de liaison descendante ;
déterminer (508) une deuxième différence de temps entre les deux types différents de trames au niveau d'un poste mobile, la deuxième différence de temps étant un intervalle de transition réception/émission au niveau du poste mobile, RTG_MS, RTG_MS étant la différence de temps entre la fin de la trame de liaison montante et le début de la trame de liaison descendante ; et
calculer (510) le temps d'aller-retour sur la base de la première différence de temps et de la deuxième différence de temps.

**4.** Procédé selon la revendication 3, dans lequel le temps d'aller-retour est calculé par RTG_MS - RTG.

**5.** Procédé selon la revendication 1 ou la revendication 3, comprenant en outre un étalonnage (304, 504) temporel des transmissions en liaison montante.

**6.** Procédé selon la revendication 1 ou la revendication 3, comprenant en outre les étapes suivantes :

déterminer (804, 1004) un décalage temporel d'une trame de liaison descendante depuis un étalonnage temporel précédent en liaison montante ; et
tenir compte (810, 1010) du décalage temporel dans le calcul du temps d'aller-retour.

**7.** Procédé selon la revendication 1, dans lequel le temps d'aller-retour est calculé par TTG - TTG_MS + D, et dans lequel D est un décalage temporel d'une trame de liaison descendante depuis un étalonnage temporel précédent en liaison montante.

**8.** Procédé selon la revendication 3, dans lequel le temps d'aller-retour est calculé par RTG_MS - RTG + D, et dans lequel D est un décalage temporel d'une trame de liaison descendante depuis un étalonnage temporel précédent en liaison montante.

**9.** Poste mobile (400) pour mesurer un temps d'aller-retour, comprenant :

des moyens (406) pour déterminer une première différence de temps entre deux types différents de trames au niveau d'une station de base, la première différence de temps étant un intervalle de transition émission/réception au niveau de la station de base, TTG, TTG étant la différence de temps entre la fin d'une trame de liaison descendante et le début d'une trame de liaison montante ;
des moyens (408) pour déterminer une deuxième différence de temps entre les deux types différents de trames au niveau d'un poste mobile, la deuxième différence de temps étant un intervalle de transition émission/réception au niveau du poste mobile, TTG_MS, TTG_MS étant la différence de temps entre la fin de la trame de liaison descendante et le début de la trame de liaison montante ; et
des moyens (410) pour calculer le temps d'aller-retour sur la base de la première différence de temps et de la deuxième différence de temps.

**10.** Poste mobile selon la revendication 9, dans lequel le temps d'aller-retour est calculé par TTG - TTG_MS.

**11.** Poste mobile (600) pour mesurer un temps d'aller-retour, comprenant :

des moyens (606) pour déterminer une première différence de temps entre deux types différents de trames au niveau d'une station de base, la première différence de temps étant un intervalle de transition réception/émission au niveau de la station de base, RTG, RTG étant la différence de temps entre la fin d'une trame de liaison montante et le début d'une trame de liaison descendante ;
des moyens (608) pour déterminer une deuxième différence de temps entre les deux types différents de trames au niveau d'un poste mobile, la deuxième différence de temps étant un intervalle de transition réception/émission au niveau du poste mobile, RTG_MS, RTG_MS étant la différence de temps entre la fin de la trame de liaison montante et le début de la trame de liaison descendante ; et
des moyens (610) pour calculer le temps d'aller-retour sur la base de la première différence de temps et de la deuxième différence de temps.

**12.** Poste mobile selon la revendication 11, dans lequel le temps d'aller-retour est calculé par RTG_MS - RTG.

**13.** Poste mobile selon la revendication 9 ou la revendication 11, comprenant en outre des moyens (404, 604) pour étalonner temporellement les transmissions en liaison montante.

**14.** Poste mobile selon la revendication 9 ou la revendication 11, comprenant en outre :

des moyens (904, 1104) pour déterminer un décalage temporel d'une trame de liaison descendante depuis un étalonnage temporel précédent en liaison montante ; et
des moyens (910, 1110) pour tenir compte du décalage temporel dans le calcul du temps d'aller-retour.

**15.** Poste mobile selon la revendication 9, dans lequel le temps d'aller-retour est calculé par TTG - TTG MS + D, et dans lequel D est un décalage temporel d'une trame de liaison descendante depuis un étalonnage temporel précédent en liaison montante.

**16.** Poste mobile selon la revendication 11, dans lequel le temps d'aller-retour est calculé par RTG_MS - RTG + D, et dans lequel D est un décalage temporel d'une trame de liaison descendante depuis un étalonnage temporel précédent en liaison montante.

**17.** Produit programme d'ordinateur pour mesurer un temps d'aller-retour, le produit programme d'ordinateur comprenant un support lisible par un ordinateur comportant des instructions sur lui qui, lorsqu'elles sont exécutées par un processeur, amènent le processeur à réaliser un procédé selon l'une quelconque des revendications 1 à 8.

FIG. 1

EP 2 298 014 B1

Round-Trip Delay = d1 + d2

**FIG. 2**

EP 2 298 014 B1

**FIG. 4**

400

- 402 — Means for detecting activation of trigger to measure RTD
- 404 — Means for calibrating UL transmission timing
- 406 — Means for determining TTG
- 408 — Means for determining TTG_MS
- 410 — Means for calculating RTD = TTG – TTG_MS

**FIG. 3**

300

- 302 — Detect activation of trigger to measure RTD
- 304 — Calibrate UL transmission timing
- 306 — Determine TTG
- 308 — Determine TTG_MS
- 310 — Calculate RTD = TTG – TTG_MS

EP 2 298 014 B1

502 → Detect activation of trigger to measure RTD

504 → Calibrate UL transmission timing

506 → Determine RTG

508 → Determine RTG_MS

510 → Calculate RTD = RTG_MS – RTG

500

**FIG. 5**

602 → Means for detecting activation of trigger to measure RTD

604 → Means for calibrating UL transmission timing

606 → Means for determining RTG

608 → Means for determining RTG_MS

610 → Means for calculating RTD = RTG_MS – RTG

600

**FIG. 6**

FIG. 7

EP 2 298 014 B1

**FIG. 8**

800

802 — Detect activation of trigger to measure RTD

804 — Determine timing shift of DL frame since last UL timing calibration (D)

806 — Determine TTG

808 — Determine TTG_MS

810 — Calculate RTD = TTG − TTG_MS + D

**FIG. 9**

900

902 — Means for detecting activation of trigger to measure RTD

904 — Means for determining timing shift of DL frame since last UL timing calibration (D)

906 — Means for determining TTG

908 — Means for determining TTG_MS

910 — Means for calculating RTD = TTG − TTG_MS + D

EP 2 298 014 B1

EP 2 298 014 B1

1000

1002 — Detect activation of trigger to measure RTD

1004 — Determine timing drift of DL frame since last UL timing calibration (D)

1006 — Determine RTG

1008 — Determine RTG_MS

1010 — Calculate RTD = RTG_MS − RTG + D

**FIG. 10**

1100

1102 — Means for detecting activation of trigger to measure RTD

1104 — Means for determining timing drift of DL frame since last UL timing calibration (D)

1106 — Means for determining RTG

1108 — Means for determining RTG_MS

1110 — Means for calculating RTD = RTG_MS − RTG + D

**FIG. 11**

EP 2 298 014 B1

Wireless Device *1202*

| | |
|---|---|
| Processor *1204* | Transmitter *1210* |
| Memory *1206* | Receiver *1212* |
| Signal Detector *1218* | DSP *1220* |

1216

1214

1222

1208

**FIG. 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1643784 A
- EP 1389028 A
- EP 1852981 A

### Non-patent literature cited in the description

- **CHAN et al.** *The Evolution Path of 4G Networks: FDD or TDD?,* December 2006
- **BERLEMANN et al.** *Unlicensed operation of IEEE 802.16: Coexistence with 802.11(A) in shared frequency bands,* September 2006